(19) Europäisches Patentamt / European Patent Office / Office européen des brevets

(11) **EP 4 727 242 A1**

(12) **EUROPEAN PATENT APPLICATION**
published in accordance with Art. 153(4) EPC

(43) Date of publication:
**15.04.2026   Bulletin 2026/16**

(21) Application number: **24842280.0**

(22) Date of filing: **11.07.2024**

(51) International Patent Classification (IPC):
**H04W 72/512** $^{(2023.01)}$

(52) Cooperative Patent Classification (CPC):
**H04W 72/0446; H04W 72/512**

(86) International application number:
**PCT/CN2024/105032**

(87) International publication number:
**WO 2025/016286 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.07.2023   CN 202310889568**

(71) Applicant: **Huawei Technologies Co., Ltd.
Shenzhen, Guangdong 518129 (CN)**

(72) Inventors:
• **CAO, Youlong
Shenzhen, Guangdong 518129 (CN)**
• **QIN, Yi
Shenzhen, Guangdong 518129 (CN)**
• **FU, Yu
Shenzhen, Guangdong 518129 (CN)**
• **XU, Rui
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, COMMUNICATION APPARATUS, AND STORAGE MEDIUM**

(57)    In a communication method, a radio access network device dynamically adjusts a transmission delay budget of a downlink data packet based on a transmission status of an uplink data packet and a correspondence that is between the uplink data packet and the downlink data packet and that is determined by a core network, to increase a speed of adjusting the transmission delay budget of the downlink data packet.

FIG. 8

## Description

This application claims priority to Chinese Patent Application No. 202310889568.2, filed with the China National Intellectual Property Administration on July 19, 2023 and entitled "COMMUNICATION METHOD, COMMUNICATION APPARATUS, AND STORAGE MEDIUM", which is incorporated herein by reference in its entirety.

TECHNICAL FIELD

This application relates to the field of communication technologies, and in particular, to a communication method.

BACKGROUND

In a wireless communication system, a joint guarantee mechanism for uplink and downlink delays may be used to dynamically adjust a delay budget of a quality of service flow (quality of service flow, QoS Flow), so as to maintain normal communication. Specifically, a core network may dynamically adjust a delay budget of an uplink/downlink QoS flow at a granularity of seconds based on an end-to-end delay requirement provided by an application server and an actual network status.

To perform an extended reality (extended reality, XR) service, an extremely fast data transmission speed is needed. Therefore, a millisecond-level transmission delay budget may be used for a video frame of the XR service. However, an existing delay budget adjustment manner at a large granularity cannot match the transmission delay budget of the video frame of the XR service, causing a transmission error of the XR service or a waste of air interface transmission resources.

SUMMARY

According to a first aspect, an embodiment of this application provides a communication method. The method may be performed by a radio access network device, may be performed by a module (for example, a processor, a chip, or a chip system) used in the radio access network device, or may be implemented by a logical node, a logical module, or software that can implement all or some functions of the radio access network device. The method includes: obtaining first information from a core network, where the first information indicates a correspondence between a first data packet and a second data packet; and adjusting a delay budget of the second data packet based on the first information and second information, where the second information is related to a transmission status of the first data packet. The first data packet may be an uplink data packet, and the second data packet may be a downlink data packet. The correspondence includes a correspondence between a quantity of data packets included in the first data packet and a quantity of data packets included in the second data packet, and a position correspondence between the first data packet and the second data packet. The first data packet may use a transmission data frame, an internet protocol (internet protocol, IP) packet, a packet data convergence protocol (packet data convergence protocol, PDCP) packet, or a protocol data unit set (protocol data unit set, PDU Set) as a granularity, and the second data packet may also use a transmission data frame, an IP packet, a PDCP packet, or a PDU set as a granularity.

According to the foregoing method, the radio access network device obtains, from the core network, the first information indicating the correspondence between the first data packet and the second data packet, and adjusts the delay budget of the second data packet based on the first information and the second information related to the transmission status of the first data packet. Therefore, a rate of adjusting a transmission delay budget for the downlink data packet is increased, to maintain transmission continuity of the downlink data packet, and increase a transmission rate of the downlink data packet and utilization of air interface transmission resources.

With reference to the first aspect, in some implementations of the first aspect, the second information includes actual average time for transmission of the first data packet, and a delay budget of the first data packet. The actual average time for the transmission of the first data packet may be obtained by measuring by the radio access network device, and the delay budget of the first data packet may be configured by the core network.

With reference to the first aspect, in some implementations of the first aspect, the first information includes information about a first time window, a time domain position of the first data packet is in the first time window, and the correspondence includes a correspondence between the first time window and the second data packet. The first data packet may be a plurality of data packets, and the second data packet may be one data packet. The information about the first time window may include time domain length information of the first time window. The time domain length information may be a fixed time domain length directly configured by the core network, or may be a time domain length that periodically changes according to a specific rule. The correspondence includes a correspondence between a quantity of data packets included in the first data packet in the first time window and the quantity of data packets (which may be one data packet) of the second data packet.

With reference to the first aspect, in some implementations of the first aspect, the first time window is determined based on an arrival periodicity of the first data packet, an arrival periodicity of the second data packet, a jitter of the first data packet, and a jitter of the second data packet.

With reference to the first aspect, in some implementations of the first aspect, the first information includes a time interval between the first time window and a time domain position of the second data packet. The time interval is mainly from a delay between the radio access network device and the core network, a delay between the core network and an application server, and a processing delay of the application server. A start moment of the time interval may be a start moment of the first time window, may be an end moment of the first time window, or may be a moment in the first time window. An end moment of the time interval may be a start moment of the time domain position of the second data packet, may be an end moment of the time domain position of the second data packet, or may be a moment in a time domain position range of the second data packet. The time interval is determined after the first time window is determined.

With reference to the first aspect, in some implementations of the first aspect, the first information includes information about a first time window and information about a second time window, a time domain position of the first data packet is in the first time window, a time domain position of the second data packet is in the second time window, and the correspondence includes a correspondence between the first time window and the second time window. The first data packet may be a plurality of data packets, and the second data packet may be a plurality of data packets. The information about the first time window may include time domain length information of the first time window. The time domain length information may be a fixed time domain length directly configured by the core network, or may be a time domain length that periodically changes according to a specific rule. The information about the second time window may include time domain length information of the second time window. The time domain length information may be a fixed time domain length directly configured by the core network, or may be a time domain length that periodically changes according to a specific rule. The correspondence includes a correspondence between a quantity of data packets included in the first data packet in the first time window and a quantity of data packets included in the second data packet in the second time window.

With reference to the first aspect, in some implementations of the first aspect, the first time window is determined based on an arrival periodicity of the first data packet, an arrival periodicity of the second data packet, a jitter of the first data packet, and a jitter of the second data packet, and the second time window is determined based on the arrival periodicity of the first data packet, the arrival periodicity of the second data packet, the jitter of the first data packet, and the jitter of the second data packet.

With reference to the first aspect, in some implementations of the first aspect, the first information includes a time interval between the first time window and the second time window. The time interval is mainly from a delay between the radio access network device and the core network, a delay between the core network and an application server, and a processing delay of the application server. A start moment of the time interval may be a start moment of the first time window, may be an end moment of the first time window, or may be a moment in the first time window. An end moment of the time interval may be a start moment of the second time window, may be an end moment of the second time window, or may be a moment in the second time window. The time interval is determined after the first time window and the second time window are determined.

With reference to the first aspect, in some implementations of the first aspect, the first data packet is the uplink data packet, and the second data packet is the downlink data packet.

According to a second aspect, an embodiment of this application provides a communication method. The method may be performed by a core network device, may be performed by a module (for example, a processor, a chip, or a chip system) used in the core network device, or may be implemented by a logical node, a logical module, or software that can implement all or some functions of the core network device. The method includes: determining first information, where the first information indicates a correspondence between a first data packet and a second data packet, and the first information is used to adjust a delay budget of the second data packet; and sending the first information to a radio access network device. The first data packet may be an uplink data packet, and the second data packet may be a downlink data packet. The first data packet may use a transmission data frame, an IP packet, a PDCP packet, or a PDU set as a granularity, and the second data packet may also use a transmission data frame, an IP packet, a PDCP packet, or a PDU set as a granularity.

According to the foregoing method, a core network determines the first information indicating the correspondence between the first data packet and the second data packet, and sends the first information to the radio access network device. The radio access network device adjusts the delay budget of the second data packet based on the first information and second information related to a transmission status of the first data packet. Therefore, a rate of adjusting a transmission delay budget for the downlink data packet is increased, to maintain transmission continuity of the downlink data packet, and increase a transmission rate of the downlink data packet and utilization of air interface transmission resources.

With reference to the second aspect, in some implementations of the second aspect, the first information includes information about a first time window, a time domain position of the first data packet is in the first time window, and the correspondence includes a correspondence between the first time window and the second data packet. The first data packet may be a plurality of data packets, and the second data packet may be one data packet. The information about the first time window may include time domain length information of the first time window. The time domain length information may be a fixed time domain length directly configured by the core network, or may be a time domain length that periodically changes according to a specific rule. The correspondence includes a correspondence between a quantity of data packets included in the first data packet in the first time window and a quantity of data packets (which may be one data packet) of the second data packet.

With reference to the second aspect, in some implementations of the second aspect, the first time window is determined based on an arrival periodicity of the first data packet, an arrival periodicity of the second data packet, a jitter of the first data packet, and a jitter of the second data packet.

With reference to the second aspect, in some implementations of the second aspect, the first information includes a time interval between the first time window and a time domain position of the second data packet. The time interval is mainly from a delay between the radio access network device and the core network, a delay between the core network and an application server, and a processing delay of the application server. A start moment of the time interval may be a start moment of the first time window, may be an end moment of the first time window, or may be a moment in the first time window. An end moment of the time interval may be a start moment of the time domain position of the second data packet, may be an end moment of the time domain position of the second data packet, or may be a moment in a time domain position range of the second data packet. The time interval is determined after the first time window is determined.

With reference to the second aspect, in some implementations of the second aspect, the first information includes information about a first time window and information about a second time window, a time domain position of the first data packet is in the first time window, a time domain position of the second data packet is in the second time window, and the correspondence includes a correspondence between the first time window and the second time window. The first data packet may be a plurality of data packets, and the second data packet may be a plurality of data packets. The information about the first time window may include time domain length information of the first time window. The time domain length information may be a fixed time domain length directly configured by the core network, or may be a time domain length that periodically changes according to a specific rule. The information about the second time window may include time domain length information of the second time window. The time domain length information may be a fixed time domain length directly configured by the core network, or may be a time domain length that periodically changes according to a specific rule. The correspondence includes a correspondence between a quantity of data packets included in the first data packet in the first time window and a quantity of data packets included in the second data packet in the second time window.

With reference to the second aspect, in some implementations of the second aspect, the first time window is determined based on an arrival periodicity of the first data packet, an arrival periodicity of the second data packet, a jitter of the first data packet, and a jitter of the second data packet, and the second time window is determined based on the arrival periodicity of the first data packet, the arrival periodicity of the second data packet, the jitter of the first data packet, and the jitter of the second data packet.

With reference to the second aspect, in some implementations of the second aspect, the first information includes a time interval between the first time window and the second time window. The time interval is mainly from a delay between the radio access network device and the core network, a delay between the core network and an application server, and a processing delay of the application server. A start moment of the time interval may be a start moment of the first time window, may be an end moment of the first time window, or may be a moment in the first time window. An end moment of the time interval may be a start moment of the second time window, may be an end moment of the second time window, or may be a moment in the second time window. The time interval is determined after the first time window and the second time window are determined.

With reference to the second aspect, in some implementations of the second aspect, the first data packet is the uplink data packet, and the second data packet is the downlink data packet.

According to a third aspect, an embodiment of this application provides an apparatus, to implement the method according to any one of the first aspect or the possible implementations of the first aspect. The apparatus includes a corresponding unit or module configured to perform the foregoing method. The unit or the module included in the apparatus may be implemented by using software and/or hardware. The apparatus may be, for example, a radio access network device, may be a chip, a chip system, a processor, or the like that supports the radio access network device in implementing the foregoing method, or may be a logical node, a logical module, or software that can implement all or some functions of the radio access network device.

According to a fourth aspect, an embodiment of this application provides an apparatus, to implement the method according to any one of the second aspect or the possible implementations of the second aspect. The apparatus includes a corresponding unit or module configured to perform the foregoing method. The unit or the module included in the apparatus may be implemented by using software and/or hardware. The apparatus may be, for example, a core network device, may be a chip, a chip system, a processor, or the like that supports the core network device in implementing the foregoing method, or may be a logical node, a logical module, or software that can implement all or some functions of the core network device.

According to a fifth aspect, an embodiment of this application provides an apparatus, including a processor. The processor is coupled to a memory. The memory is configured to store instructions. When the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that, for beneficial effects of features corresponding to the first aspect and the second aspect in the third aspect to the thirteenth aspect, refer to related descriptions in the first aspect and the second aspect. Details are not described again.

BRIEF DESCRIPTION OF DRAWINGS

FIG. 1 is a diagram of a communication system to which an embodiment of this application is applied;
FIG. 2 to FIG. 5 are diagrams of several system frameworks to which embodiments of this application are applicable;
FIG. 6 is a diagram of video frame arrival;
FIG. 7 is a diagram of a communication system to which an embodiment of this application is applied;
FIG. 8 is a diagram of a communication method according to an embodiment of this application; and
FIG. 9 and FIG. 10 are diagrams of apparatuses according to embodiments of this application.

DESCRIPTION OF EMBODIMENTS

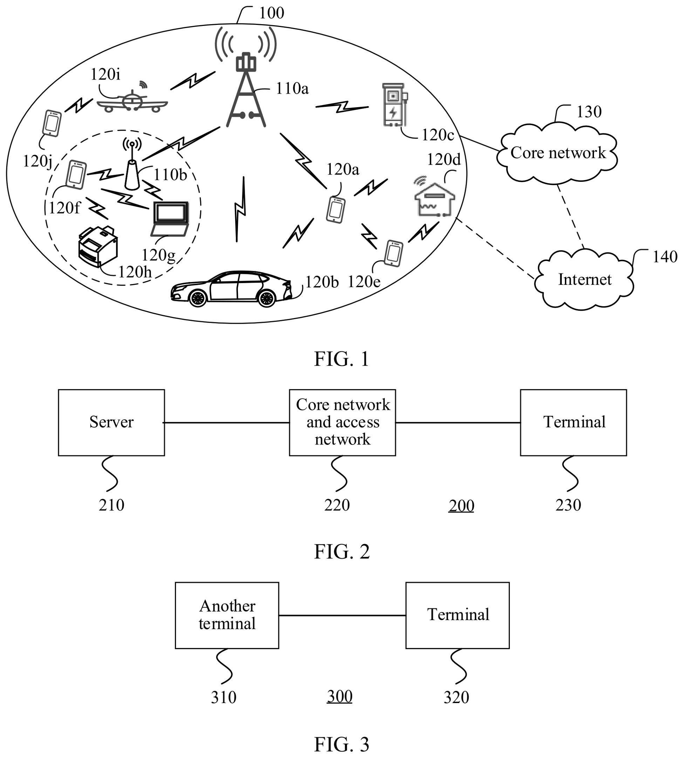

FIG. 1 is a diagram of an architecture of a communication system to which an embodiment of this application is applied. As shown in FIG. 1, the communication system 10 includes a radio access network (radio access network, RAN) 100 and a core network (core network, CN) 130. Optionally, the communication system 10 may further include the internet 140. The RAN 100 may include at least one RAN node (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 130 in a wireless or wired manner. A core network device in the core network 130 and the RAN node 110 in the RAN 100 may be different independent physical devices, may be a same physical device that integrates a core network logical function and a radio access network logical function, or may be a device that integrates a part of core network logical functions and a part of radio access network logical functions. The terminals may be connected to each other in a wired or wireless manner and the RAN nodes may be connected to each other in a wired or wireless manner. FIG. 1 is merely a diagram. The communication system may further include other network devices, for example, may further include a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, and a future evolved communication system. For example, the communication systems are a long term evolution (long term evolution, LTE) system, a new radio (new radio, NR) system, an open access network (open RAN, O-RAN, or ORAN) system, a cloud radio access network (cloud radio access network, CRAN) system, a wireless-fidelity (wireless-fidelity, Wi-Fi) system, a communication system related to a 3rd generation partnership project (3rd generation partnership project, 3GPP), another communication system of this type, and a communication system integrating the foregoing two or more systems.

The RAN node may also have a different expression, for example, a radio access network device. In this application, unless otherwise specified, the radio access network device is used for expression subsequently. The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in the 5G communication system, a next generation base station in the 6G communication system, a base station in a future mobile communication system, an access node in the Wi-Fi system, or the like, or may be a module or a unit that completes some functions of a base station, for example, may be a central unit (central unit, CU) or a distributed unit (distributed unit, DU). The radio access network device may be a macro base station (for example, 110a in FIG. 1), may be a micro base station or an indoor base station (for example, 110b in FIG. 1), may be a relay node or a donor node, or may be a radio controller in a CRAN scenario. Optionally, the radio access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). It may be understood that all or some functions of the radio access network device in this application may alternatively be implemented by using a software function running on hardware, or may be implemented by using an instantiated virtualization function on a platform (for example, a cloud platform). Alternatively, the radio access network device in this application may be a logical node, a logical module, or software that can implement all or some functions of the radio access network device.

In another possible scenario, a plurality of radio access network devices cooperate to assist the terminal in implementing radio access, and different radio access network devices respectively implement some functions of the base station. For example, the radio access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by a software module, a hardware module, or a combination of a software module and a hardware module. A specific technology and a specific device form that are used by the radio access network device are not limited in embodiments of this application. For ease of description, the following provides descriptions by using an example in which the base station is used as the radio access network device.

The 5G communication system is used as an example. A core network device may be configured to complete three functions: registration, connection, and session management, and mainly includes a network exposure function (network exposure function, NEF) network element, a policy control function (policy control function, PCF) network element, an application function (application function, AF) network element, an access and mobility management function (access and mobility management function, AMF) network element, a session management function module (session management function, SMF) network element, a user plane function (user plane function, UPF) network element, and the like. The foregoing network element functions may be independently disposed, or may be combined and performed on one network element.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The terminal in this application may alternatively be a virtual reality (virtual reality, VR) terminal, an augmented reality (augmented reality, AR) terminal, or a mixed reality (mixed reality, MR) terminal. The VR terminal, the AR terminal, and the MR terminal each may be referred to as an XR terminal. The XR terminal may be, for example, a head-mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

For example, the radio access network device is a base station. The base station and the terminal may be at fixed positions, or may be movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or the uncrewed aerial vehicle 120i in FIG. 1 may be configured as a mobile base station. For those terminals 120j that access the radio access network 100 through 120i, the terminal 120i is a base station. However, for the base station 110a, 120i is a terminal, that is, 110a and 120i communicate with each other by using a radio air interface protocol. Certainly, 110a and 120i may alternatively communicate with each other by using an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the function of the radio access network device may alternatively be performed by a module (for example, a chip) in the base station, or may be performed by a control subsystem including the function of the radio access network device. The control subsystem including the function of the radio access network device herein may be a control center in the foregoing application scenarios such as the smart grid, the industrial control, the smart transportation, and the smart city of the terminal. The function of the terminal may alternatively be performed by a module (for example, a chip or a modem) in the terminal, or may be performed by an apparatus including the function of the terminal.

In this application, the radio access network device sends a downlink signal or downlink information to the terminal, where the downlink information is carried on a downlink channel. The terminal sends an uplink signal or uplink information to the radio access network device, where the uplink information is carried on an uplink channel. The terminal sends a sidelink (sidelink) signal or sidelink information to a terminal, where the sidelink information is carried on a sidelink channel. The information may be control information, or may be data information.

An XR technology has advantages such as a plurality of views and strong interactivity, can provide brand-new experience for the user, and has great application value and great commercial potential. XR includes technologies such as VR, AR, and MR, and can be widely used in many fields such as entertainment, gaming, medical care, advertising, industry, online education, and engineering. A VR technology is mainly to render visual and audio scenarios to simulate sensory stimulation of vision and audio in a real world to the user as much as possible. In the VR technology, the user usually wears the XR terminal (for example, the head-mounted device) to simulate vision and/or hearing of the user. The VR technology may be further used to perform action tracking on the user, to update simulated visual and/or auditory content in time. An AR technology is mainly to provide additional visual and/or auditory information or manually generated content in a real environment perceived by the user. The user may obtain the real environment directly (for example, without sensing, processing, and rendering) or indirectly (for example, the real environment is transferred through a sensor) and perform further enhancement processing. An MR technology is to insert some virtual elements into a physical scenario to provide the user with immersive experience in which the elements are a part of a real scenario.

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be referred to as a transport network 220 for short, for example, an LTE network, a 5G network, or a 6G network), and a terminal 230. The server 210 may be configured to: encode, decode, and render XR source data. The transport network 220 may be configured for transmission of XR data. The terminal 230 provides diversified XR experience for a user by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 through the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data onto the terminal 320. For another example, the another terminal 310 and the terminal 320 are vehicle-mounted terminals, and the XR data may be exchanged between the vehicle-mounted terminals. It may be understood that the another terminal 310 may be further connected to a transport network (for example, an LTE network, a 5G network, or a 6G network), to obtain XR data from the transport network, or send data to the transport network.

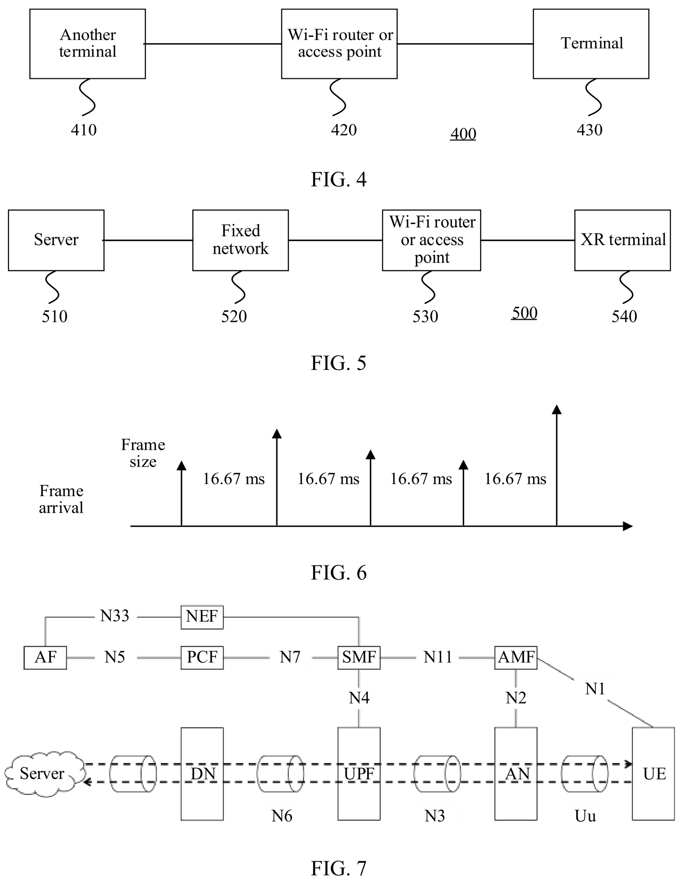

FIG. 4 is a diagram of another scenario to which an embodiment of this application is applicable. FIG. 4 shows a system 400, including a terminal 430, a Wi-Fi router or Wi-Fi access point 420 (which may be referred to as a Wi-Fi apparatus 420 for short), and another terminal 410. The another terminal 410 is a terminal other than the terminal 430. The another terminal 410 may transmit XR data to the terminal 430 through the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data onto the television device, the smart screen device, or the electronic tablet device through the Wi-Fi router, the Wi-Fi access point, or the set-top box, and present the XR data to a user.

FIG. 5 is a diagram of another scenario to which an embodiment of this application is applicable. FIG. 5 shows a system 500, including a server 510, a fixed network 520, a Wi-Fi router or Wi-Fi access point 530 (which may be referred to as a Wi-Fi apparatus 530 for short), and a terminal 540. The server 510 may be configured to: encode, decode, and render XR source data, and transmit XR data to the terminal 540 through the fixed network 520 and the Wi-Fi apparatus 530. For example, the fixed network 520 is an operator network, the Wi-Fi apparatus 530 is the Wi-Fi router, the Wi-Fi access point, or a set-top box, and the server 510 transmits or projects the XR data onto the terminal 540 through the operator network 520 and the Wi-Fi apparatus 530.

It may be understood that FIG. 2 to FIG. 5 are merely examples of several scenarios to which embodiments of this application are applicable, and are not intended to limit a scenario to which embodiments of this application are applicable.

The following describes technical solutions of this application with reference to the accompanying drawings.

Service data of an XR transmission service and a video transmission service usually arrives periodically based on a frame rate. As shown in FIG. 6, for a video with a frame rate of 60 frames per second (frames per second, FPS), generally, each image frame arrives at an interval of 16.67 milliseconds (milliseconds, ms) (which may also be expressed as a frame periodicity of 16.67 ms), and data volumes of arriving image frames may be different (in the figure, a higher arrow height indicates a larger data volume, and a lower arrow height indicates a smaller data volume). A common frame rate of a video frame is 30 FPS, 60 FPS, 90 FPS, or 120 FPS, and a corresponding frame periodicity is 33.33 ms, 16.67 ms, 11.11 ms, or 8.33 ms.

In a network transmission process, one image frame of the XR transmission service and the video transmission service may be divided into a plurality of internet protocol (internet protocol, IP) packets at a network transport layer and transmitted to a core network, and then the IP packets are transmitted to a terminal through a radio access network device. In the network transmission process, if transmission of one IP packet is incorrectly performed, an entire data frame cannot be restored. For example, transmission of one image frame of the XR transmission service is performed over a network. The image frame is split into 50 IP packets at the network transport layer and transmitted to the core network, and then the 50 IP packets are transmitted to a UE through the radio access network device.

Different XR services usually have different service models. For example, a change of VR scenario content displaying is generally caused by a posture or a position (action). Therefore, a VR service is mainly used to upload position and posture information, and a data volume is small, and is usually only dozens of kilobits per second (kilobits per second, Kbps). In a network transmission process, a data frame uploaded by using the VR service may be split into dozens of IP packets. Arrival frequencies of the dozens of IP packets are generally 100 hertz to 500 hertz (hertz, Hz), and it may also be understood as that arrival periodicities of the dozens of IP packets are generally 2 ms to 10 ms.

For the XR transmission service, a quality of service (quality of service, QoS) guarantee mechanism may be used. An existing QoS guarantee mechanism in 5G communication includes a QoS flow (flow) that supports a guaranteed flow bit rate (guaranteed bit rate, GBR) and a QoS flow that supports a non-guaranteed flow bit rate (non-guaranteed bit rate, Non-GBR), and further supports inferential QoS.

In a PDU session (session), a QoS flow is a minimum granularity for QoS differentiation. For example, in a 5G system, a QoS flow identifier (QoS Flow Identifier, QFI) is used to identify a QoS flow, and the QFI uniquely identifies a QoS flow in a PDU session. One PDU session may have a plurality of (for example, a maximum of 64) QoS flows, but each QoS flow has a different QFI. In a PDU session, user plane service flows that have a same QFI use a same service forwarding processing manner (for example, scheduling). At a configuration granularity, one PDU session may correspond to a plurality of radio bearers (radio bearer), services on a same radio bearer may use different service levels, and one radio bearer may include a plurality of QoS flows.

In the 5G system, the QoS flow is controlled by a session management function (session management function, SMF) module of the core network, and may be preconfigured or established and modified by using a PDU session. For example, as shown in FIG. 7, a characteristic of one QoS flow includes three parts.

1. QoS profiles (QoS Profile) on an access network (access network, AN) side: These configurations are provided by the SMF for the AN through an N2 interface or preconfigured in the AN.

2. QoS rules (QoS Rule) on a UE side: These rules may be provided by the SMF for the UE through N1, or derived by the UE by using a reflective QoS mechanism.

3. Uplink and downlink packet detection rules (packet detection rule, PDR) on a user plane function (user plane function, UPF) side: These PDRs are provided by the SMF for the UPF through an N4 interface.

Characteristic information that is related to a QoS flow and that is sent by the core network to the radio access network device is referred to as a QoS profile. The characteristic information of the QoS flow is shown in the following table.

Table 1: Characteristic information of a QoS flow

| QoS flow attribute | Description |
|---|---|
| 5G QoS identifier (5G quality identity, 5QI) | Represents a radio characteristic of the QoS flow, where each QoS has a 5G QoS identifier |
| Allocation and retention priority (allocation and retention priority, ARP) | Priority of the QoS flow on a 5G radio access network (next generation radio access network, NG-RAN) interface, which is applicable between different UEs or between QoS flows in one UE, where each QoS flow has an allocation and retention priority |
| Guaranteed flow bit rate (guaranteed flow bit rate, GFBR) | Guaranteed data rate, where only a GBR QoS flow has the guaranteed flow bit rate, including GFBRs of uplink and downlink GBR QoS flows |
| Maximum flow bit rate (maximum flow bit rate, MFBR) | Maximum data rate, where only the GBR QoS flow has the maximum flow bit rate, including MFBRs of uplink and downlink GBR QoS flows |
| Notification control | Indicates whether a radio access network device performs reporting for a 5G core network (5G core network, 5GC) when QoS cannot be met, where only the GBR QoS flow has the notification control, and the notification control is optional |
| Maximum packet loss rate (maximum packet loss rate, MPLR) | The maximum packet loss rate represents a maximum packet loss rate that can be tolerated by a QoS flow, where the maximum packet loss rate parameter can be provided only on the GBR QoS flow |
| Reflective QoS attribute (reflective QoS attribute, RQA) | The reflective QoS attribute indicates whether an uplink complies with mirror mapping, where only a non-GBR QoS flow has the reflective QoS attribute |

In the characteristic of the QoS flow, whether a QoS flow is a GBR QoS flow or a non-GBR QoS flow depends on a QoS profile of the QoS flow. QoS parameters included in a QoS profile of a QoS flow include the following.

1. QoS parameters that may be included in a QoS profile of each QoS flow: a 5QI and an ARP.

2. Parameter that may further be included in a QoS profile of each non-GBR QoS flow: an RQA.

3. Parameters that may further be included in a QoS profile of each GBR QoS flow: a guaranteed flow bit rate (GFBR) and a maximum flow bit rate (MFBR).

4. Indication control and maximum packet loss rate that may further be included in a QoS profile of each GBR QoS flow.

In the characteristic of the QoS flow, the QoS rule is a rule for the UE to classify and mark an uplink user plane data service. In other words, the UE associates uplink data with a corresponding QoS flow according to the QoS rule. The QoS rule may be explicitly provided for the UE (and may also be understood as being explicitly configured for the UE by using signaling in a PDU session establishment/modification procedure), may be preconfigured on the UE, or may be implicitly derived by the UE by using the reflective QoS mechanism. The QoS rule has the following characteristics.

1. One QoS rule includes: a QFI of an associated QoS flow, a data packet filter set (for example, a filter list), and a priority.
2. One QoS flow may have a plurality of QoS rules.
3. One default QoS rule needs to be configured for each PDU session, and the default QoS rule is associated with one QoS flow.

The 5QI in Table 1 is a scalar used to index a 5G QoS characteristic. Some 5QIs are standardized, some are preconfigured, and some are dynamically defined. Corresponding content is shown in Table 2.

Table 2: 5QI content

| 5QI attribute | Description |
|---|---|
| Resource type | GBR, delay critical GBR, or non-GBR |
| Priority | Radio interface scheduling priority, which is applicable between UEs or between QoS flows of a UE |
| Data delay (for example, a packet delay budget (packet delay budget, PDB)) | GBR QoS flow: On a premise that a GFBR is met, 98% of data packets should not exceed a maximum delay critical GBR; and on a premise that a GBER is met, a data packet that exceeds the PDB is considered as being already lost |
| Packet error rate (packet error rate, PER) | Packet loss rate of the GBR QoS flow |
| Averaging window | Time period for calculating the GFBR and an MFBR of the GBR QoS flow |
| Maximum data burst volume | Maximum data volume in a PDB range |

To improve accuracy of evaluating transmission performance of the XR service by a wireless network, a delay and reliability of the XR service may not be measured by using a conventional IP packet or a packet data convergence protocol (packet data convergence protocol, PDCP) packet as a granularity, but measured by using a video frame (which may be referred to as a protocol data unit set (protocol data unit set, PDU Set)) as a granularity. The following parameters are separately defined:

•    PDU set delay budget (protocol data unit set delay budget, PSDB);
•    PDU set error rate (protocol data unit set error rate, PSER); and
•    PDU set importance (protocol data unit set importance),

to measure a transmission delay, a frame error situation, and importance representing the video frame that are of the video frame. For example, the foregoing parameters such as the PSDB, the PSER, and the PDU set importance may be included in the 5QI of the characteristic information of the QoS flow.

The XR service has a joint uplink and downlink end-to-end delay requirement. A cloud game application is used as an example. A terminal device collects an operation instruction, and then uploads a related operation instruction to the radio access network device over a radio access network. Then, the core network and a fixed network upload a data packet of the operation instruction to a server. After receiving the operation instruction, the server performs game content logic calculation and completes video image rendering, and then encodes and compresses an image frame into a data packet for sending. When the video data packet passes through the fixed network and the core network, the core network sets a corresponding QoS parameter for the data packet according to the foregoing QoS guarantee mechanism, and then transmits the data packet to the terminal device. The terminal device decodes corresponding data for image displaying. Different types of cloud game services have different end-to-end delay requirements. Generally, the delay may range from 70 ms to 100 ms. Specifically, a processing delay of the terminal is about 15 ms, and there is small delay fluctuation. A processing delay on a server side is about 30 ms, and operations related to encoding and rendering may cause some delay jitters. Uplink and downlink transmission delays from the fixed network to the core network and from the core network to the radio access network device are about 20 ms, and there is almost no delay jitter. Uplink and downlink transmission delays from the core network to the radio access network device are 30 ms, and there is a large delay jitter due to instability of a radio environment.

To meet the end-to-end delay requirement of the XR service, the core network may dynamically adjust PDB or PSDB parameters of an uplink QoS flow and a downlink QoS flow based on a delay requirement provided by an application layer (generally provided by an AF to the SMF, to specify a one-way transmission delay from the UE to the UPF, and an end-to-end delay is twice the one-way transmission delay).

A joint guarantee mechanism for uplink and downlink delays is at a QoS flow level. To be specific, the core network may dynamically adjust a delay budget of the uplink/downlink QoS flow at a granularity of seconds based on an end-to-end delay requirement provided by an application server and an actual network status. However, for a service that needs a high data transmission speed, for example, the foregoing XR service, a transmission delay budget of a video frame of the XR service is at a millisecond level. For example, the transmission delay budget of the video frame is about 10 ms, and a transmission delay budget of a tactile packet is about 5 ms. Delay budget adjustment at a large granularity cannot match a transmission delay budget of each video frame of the XR service, causing a transmission error of the video frame or a waste of air interface transmission resources. Therefore, how to increase a speed of adjusting a transmission delay budget is an urgent problem to be resolved.

This application provides a communication method mainly from a perspective of reducing a waste of air interface transmission resources and improving service experience. A radio access network device obtains, from a core network, first information indicating a correspondence between a first data packet and a second data packet, and adjusts a delay budget of the second data packet based on the first information and second information related to a transmission status of the first data packet. Therefore, a rate of adjusting a transmission delay budget for a downlink data packet is increased, to maintain transmission continuity of the downlink data packet, and increase a transmission rate of the downlink data packet and utilization of the air interface transmission resources.

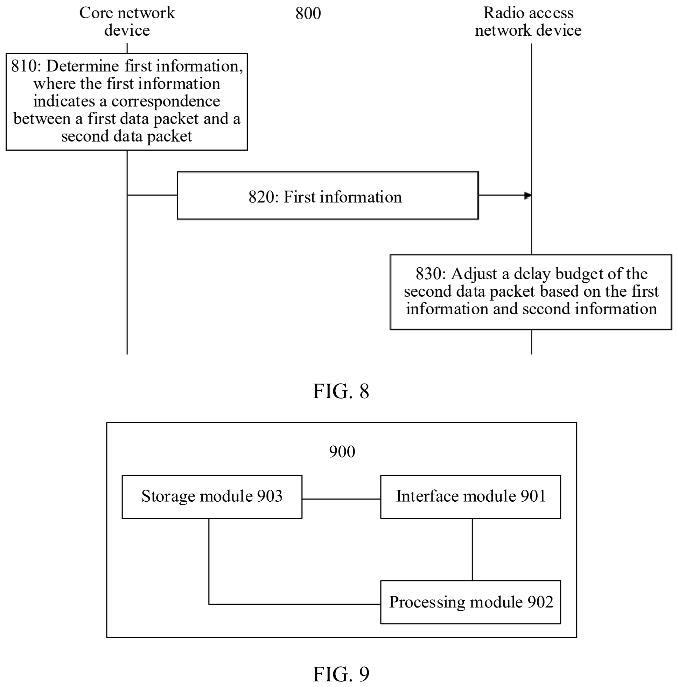

FIG. 8 is an interaction diagram of a communication method 800 according to an embodiment of this application. In FIG. 8, an example in which a radio access network device and a core network device are used as execution bodies of interaction illustration is used to illustrate the method. However, an execution body of the interaction illustration is not limited in this application. For example, the radio access network device in FIG. 8 may alternatively be a module (for example, a chip, a chip system, or a processor) used in the radio access network device, or may be a logical node, a logical module, or software that can implement all or some functions of the radio access network device. The core network device in FIG. 8 may alternatively be a module (for example, a chip, a chip system, or a processor) used in the core network device to implement the method, or may be a logical node, a logical module, or software that can implement all or some functions of the core network device. As shown in FIG. 8, the method 800 in this embodiment may include part 810, part 820, and part 830.

Part 810: The core network device determines first information, where the first information indicates a correspondence between a first data packet and a second data packet. The first data packet may be an uplink data packet, and the second data packet may be a downlink data packet.

For example, the correspondence includes a correspondence between a quantity of data packets included in the first data packet and a quantity of data packets included in the second data packet, and a position correspondence between the first data packet and the second data packet.

For example, the first data packet or the second data packet may use a transmission data frame, an IP packet, a PDCP packet, or a PDU set as a granularity. The first data packet or the second data packet may include one or more data packets. Granularities of the first data packet and the second data packet are not limited in this application.

Part 820: The core network device sends the first information to the radio access network device, and correspondingly, the radio access network device obtains the first information from the core network device.

Part 830: The radio access network device adjusts a delay budget of the second data packet based on the first information and second information, where the second information is related to a transmission status of the first data packet.

In the method 800, the radio access network device obtains the first information that is determined by a core network and that indicates the correspondence between the first data packet and the second data packet, and adjusts the delay budget of the second data packet based on the first information and the second information related to the transmission status of the first data packet. Therefore, a rate of adjusting a transmission delay budget for a downlink data packet is increased, to maintain transmission continuity of the downlink data packet, and increase a transmission rate of the downlink data packet and utilization of air interface transmission resources.

In this application, "sending information to ... (the radio access network device)" may be understood as that a destination end of the information is the radio access network device; and may include directly or indirectly sending the information to the radio access network device. "Receiving ... information from (the radio access network device)" may be understood as that a source end of the information is the radio access network device; and may include directly or indirectly receiving the information from the radio access network device. Information may undergo necessary processing, for example, a format change, between a source end for sending the information and a destination end. However, the destination end may understand valid information from the source end. A similar expression in this application may be understood similarly, and details are not described herein again.

In a possible implementation of the first information, the first information includes information about a first time window, a time domain position of the first data packet is in the first time window, and the correspondence includes a correspondence between the first time window and the second data packet. In this implementation, the first data packet may include a plurality of data packets, and the second data packet may include one data packet. Therefore, the correspondence may be described as a correspondence between a quantity of data packets included in the first data packet in the first time window and the quantity of data packets (which may be one data packet) of the second data packet. For example, in a cloud game scenario, the second data packet includes one PDU set, the PDU set is an image frame, the first data packet is located in the first time window and includes a plurality of PDU sets, and the plurality of PDU sets are information of an action or operation type. In this case, the correspondence includes a correspondence between the PDU set representing the image frame and the plurality of PDU sets representing the information of the action or operation type.

In a possible implementation, that the core network device determines the first information includes: The core network device determines the first time window.

For example, the first time window is determined based on an arrival periodicity of the first data packet, an arrival periodicity of the second data packet, a jitter of the first data packet, and a jitter of the second data packet.

For example, the information about the first time window may include time domain length information of the first time window, and the time domain length information may be a fixed time domain length directly configured by the core network device based on the arrival periodicity of the first data packet, the arrival periodicity of the second data packet, the jitter of the first data packet, and the jitter of the second data packet, for example, 50 ms, 25 ms, 1/60 ms, or 1/90 ms. Alternatively, the time domain length may change periodically according to a specific rule. For example, a periodicity of the time domain length change is T, and the core network device configures the time domain length as a cycle of three values: 17 ms, 17 ms, and 16 ms. In this case, the time domain length is configured as 17 ms in a time period from 0 to T, the time domain length is configured as 17 ms in a time period from T to 2T, and the time domain length is configured as 16 ms in a time period from 2T to 3T. The time domain length is configured as 17 ms again in a time period from 3T to 4T, and the cycle is performed according to this rule. Details are not described.

For example, the first information further includes a time interval between the first time window and a time domain position of the second data packet. The time interval may include the following three parts:

- delay between the radio access network device and the core network device, which, for example, may be measured by using an internet control message protocol (internet control message protocol, IMCP) command;
- delay between the core network and an application server, which, for example, may be measured by using an internet control message protocol (internet control message protocol, IMCP) command; and
- processing delay of the application server, where for example, the core network obtains the processing delay of the application server through an AF function.

For example, the time interval may be a sum of the foregoing three delays.

A start moment of the time interval may be a start moment of the first time window, may be an end moment of the first time window, or may be a moment in the first time window. This is not limited in this application. An end moment of the time interval may be a start moment of the time domain position of the second data packet, may be an end moment of the time domain position of the second data packet, or may be a moment in a time domain position range of the second data packet. This is not limited in this application. It may be understood that the time interval is determined after the first time window is determined. The correspondence includes a correspondence between the first time window and the time domain position of the second data packet that are determined based on the time interval.

In the foregoing implementation method, the core network device determines, based on the information about the first time window and the time interval between the first time window and the time domain position of the second data packet, the first information indicating the correspondence between the first data packet and the second data packet. This can effectively reduce overheads of the first information while improving efficiency of adjusting the transmission delay budget for the downlink data packet.

In another possible implementation of the first information, the first information includes information about a first time window and information about a second time window, a time domain position of the first data packet is in the first time window, a time domain position of the second data packet is in the second time window, and the correspondence includes a correspondence between the first time window and the second time window. In this implementation, the first data packet may include a plurality of data packets, and the second data packet may include a plurality of data packets. Therefore, the correspondence may be described as a correspondence between a quantity of data packets included in the first data packet in the first time window and the quantity of data packets of the second data packet. For example, the plurality of data packets of the first data packet are a plurality of PDU sets, and the plurality of data packets of the second data packet are a plurality of PDU sets.

In a possible implementation, that the core network device determines the first information includes: The core network device determines the first time window and the second time window.

For example, the first time window and the second time window each may be determined based on an arrival periodicity of the first data packet, an arrival periodicity of the second data packet, a jitter of the first data packet, and a jitter of the second data packet.

For example, information about the first time window may include time domain length information of the first time window. For a method for configuring the time domain length information of the first time window, refer to the foregoing descriptions. Details are not described herein again.

For example, information about the second time window may include time domain length information of the second time window. For a method for configuring the time domain length information of the second time window, refer to the foregoing descriptions. Details are not described herein again.

The time domain length information of the first time window and the time domain length information of the second time window may be configured by the core network device by using one time window value. For example, a time domain length of the first time window is a, and a time domain length of the second time window is b. The core network device can determine one time window value c based on a and b. In this case, the time domain length information of the first time window and the time domain length information of the second time window may be indicated by the value c, where a, b, and c are all positive numbers. Alternatively, the time domain length information of the first time window and the time domain length information of the second time window may be configured by the core network by using two time window values. For example, a time domain length of the first time window is a, and a time domain length of the second time window is b. In this case, the core network device may set a value c to indicate the time domain length information of the first time window, and set a value d to indicate the time domain length information of the second time window, where a, b, c, and d are all positive numbers. A manner in which the core network configures the time domain length information of the first time window and the time domain length information of the second time window is not limited in this application.

Because the time domain position of the first data packet is in the first time window, and the time domain position of the second data packet is in the second time window, the correspondence includes a correspondence between the quantity of data packets included in the first data packet in the first time window and a quantity of data packets included in the second data packet in the second time window. For example, the first information further includes a time interval between the first time window and the second time window. Composition of the time interval is consistent with the foregoing descriptions in this application, and details are not described herein again.

A start moment of the time interval may be a start moment of the first time window, may be an end moment of the first time window, or may be a moment in the first time window. This is not limited in this application. An end moment of the time interval may be a start moment of a time domain position of the second time window, may be an end moment of the time domain position of the second time window, or may be a moment in a time domain position range of the second time window. This is not limited in this application. It may be understood that the time interval is determined after the first time window and the second time window are determined. In this case, the correspondence includes a position correspondence between the first time window and the second time window that are determined based on the time interval.

In the foregoing implementation method, the core network device determines, based on the information about the first time window, the information about the second time window, and the time interval between the first time window and the second time window, the first information indicating the correspondence between the first data packet and the second data packet. This improves, when an arrival periodicity of the downlink data packet is short, efficiency of adjusting the transmission delay budget for the downlink data packet.

In a possible implementation, a first data flow includes the first data packet, the first data flow further includes at least one third data packet, and the first data flow may be an uplink data flow. The first information includes information about a third time window, and a time domain position of the third data packet is in the third time window. The first time window and the third time window may overlap in time domain. It may also be understood as that a start moment of the third time window is earlier than the end moment of the first time window, and an end moment of the third time window is later than the end moment of the first time window. For example, in a cloud game scenario, when rendering a video frame image, an application layer generally considers a plurality of pieces of action position information. Time domain positions of the plurality of pieces of action position information may be simultaneously in the first time window and the third time window, that is, the first time window and the third time window may overlap in time domain. The overlapping may be configured by the core network device, and a degree of the overlapping is related to the arrival periodicity of the first data packet, the arrival periodicity of the second data packet, the jitter of the first data packet, and the jitter of the second data packet. In this implementation, the first time window is determined with reference to a case in which a plurality of pieces of action position information are considered when the application layer renders a video image frame.

In another possible implementation, a first data flow includes the first data packet, the first data flow further includes at least one third data packet, and the first data flow may be an uplink data flow. The first information further includes information about a third time window, a time domain position of the third data packet is in the third time window, and a start moment of the third time window is equal to the end moment of the first time window, or a start moment of the third time window coincides with the end moment of the first time window.

In a possible implementation of this application, the radio access network device may adjust the delay budget of the second data packet based on the first information and the second information. The second information includes actual average time for transmission of the first data packet, and a delay budget of the first data packet.

Specifically, after obtaining the first information, the radio access network device may obtain, based on information included in a first indication, for example, the information about the first time window, the first data packet in the first time window, and then obtains, through measurement, the actual average time for the transmission of the first data packet. The radio access network device may adjust the delay budget of the second data packet based on the actual average time for the transmission of the first data packet, the delay budget that is of the first data packet and that is configured by the core network device, and the delay budget that is of the second data packet and that is configured by the core network device.

The second data packet may be obtained based on the obtained first data packet and the correspondence that is between the first data packet and the second data packet and that is indicated by the first information. In an example, the second data packet may be determined based on the information about the first time window, and the time interval between the first time window and the time domain position of the second data packet that are in the first information. In another example, the second data packet is determined based on the information about the first time window, the information about the second time window, and the time interval between the first time window and the second time window that are in the first information.

Therefore, the radio access network device may adjust the delay budget of the second data packet based on the first information, the actual average time for the transmission of the first data packet, and the delay budget of the first data packet.

In an example, an adjusted delay budget of the second data packet satisfies:

$$PDB'_{DL} = PDB_{DL} + PDB_{UL} + t_{UL}$$

$PDB'_{DL}$ is the adjusted delay budget of the second data packet; $PDB_{DL}$ is the delay budget of the second data packet before adjustment, and may be configured by the core network device; $PDB_{UL}$ is the delay budget of the first data packet, and may be configured by the core network device; and $t_{UL}$ is the actual average time for the transmission of the first data packet, and may be obtained by the radio access network device through measurement.

Corresponding to the method provided in the foregoing method embodiments, embodiments of this application further provide corresponding apparatuses, including corresponding modules configured to perform the foregoing embodiments. The modules may be software, hardware, or a combination of software and hardware.

As shown in FIG. 9, an embodiment of this application provides an apparatus 900. The apparatus may be a core network device, may be a module (for example, an integrated circuit or a chip) used in the core network device, or may be a logical node, a logical module, or software that can implement all or some functions of the core network device. Alternatively, the apparatus may be a radio access network device, may be a module (for example, an integrated circuit or a chip) used in the radio access network device, or may be a logical node, a logical module, or software that can implement all or some functions of the radio access network device. The apparatus may alternatively be another communication module. For example, the apparatus 900 may implement functions of the radio access network device in the method 800 and various possible implementations, or the apparatus 900 may implement functions of the core network device in the method 800 and various possible implementations. The apparatus 900 may include: an interface module 901 (or referred to as an interface unit) and a processing module 902 (or referred to as a processing unit), and may further include a storage module 903 (or referred to as a storage unit).

In a possible design, one or more modules in FIG. 9 may be implemented by one or more processors, may be implemented by one or more processors and one or more memories, may be implemented by one or more processors and one or more transceivers, or may be implemented by one or more processors, one or more memories, and one or more transceivers. This is not limited in this embodiment of this application. The processor, the memory, and the transceiver may be disposed separately, or may be integrated.

The apparatus has a function of implementing the core network device described in embodiments of this application. For example, the apparatus includes a corresponding module, unit, or means (means) used by the core network device to perform the steps related to the core network device described in embodiments of this application. The function, unit, or means (means) may be implemented by software, may be implemented by hardware, may be implemented by hardware by executing corresponding software, or may be implemented by a combination of software and hardware. For details, refer to the corresponding descriptions in the foregoing corresponding method embodiments. Alternatively, the apparatus has a function of implementing the radio access network device described in embodiments of this application. For example, the apparatus includes a corresponding module, unit, or means (means) used by the radio access network device to perform the steps related to the radio access network device described in embodiments of this application. The function, unit, or means (means) may be implemented by software, may be implemented by hardware, may be implemented by hardware by executing corresponding software, or may be implemented by a combination of software and hardware. For details, refer to the corresponding descriptions in the foregoing corresponding method embodiments.

In a possible design, the apparatus 900 includes the interface module 901 and the processing module 902. The apparatus 900 may be, for example, a radio access network device, may be a module (for example, an integrated circuit or a chip) used in the radio access network device, or may be a logical node, a logical module, or software that can implement all or some functions of the radio access network device. The interface module 901 is configured to obtain first information from a core network, where the first information indicates a correspondence between a first data packet and a second data packet. The processing module 902 is configured to adjust a delay budget of the second data packet based on the first information and second information, where the second information is related to a transmission status of the first data packet.

In a possible implementation of the apparatus 900, the second information includes actual average time for transmission of the first data packet, and a delay budget of the first data packet.

In a possible implementation of the apparatus 900, the first information includes information about a first time window, a time domain position of the first data packet is in the first time window, and the correspondence includes a correspondence between the first time window and the second data packet.

In a possible implementation of the apparatus 900, the first time window is determined based on an arrival periodicity of the first data packet, an arrival periodicity of the second data packet, a jitter of the first data packet, and a jitter of the second data packet.

In a possible implementation of the apparatus 900, the first information includes a time interval between the first time window and a time domain position of the second data packet.

In a possible implementation of the apparatus 900, the first information includes information about a first time window and information about a second time window, a time domain position of the first data packet is in the first time window, a time domain position of the second data packet is in the second time window, and the correspondence includes a correspondence between the first time window and the second time window.

In a possible implementation of the apparatus 900, the first time window is determined based on an arrival periodicity of the first data packet, an arrival periodicity of the second data packet, a jitter of the first data packet, and a jitter of the second data packet, and the second time window is determined based on the arrival periodicity of the first data packet, the arrival periodicity of the second data packet, the jitter of the first data packet, and the jitter of the second data packet.

In a possible implementation of the apparatus 900, the first information includes a time interval between the first time window and the second time window.

In a possible implementation of the apparatus 900, the first data packet is an uplink data packet, and the second data packet is a downlink data packet.

In a possible design, the apparatus 900 includes the interface module 901 and the processing module 902. The apparatus 900 may be, for example, a core network device, may be a module (for example, an integrated circuit or a chip) used in the core network device, or may be a logical node, a logical module, or software that can implement all or some functions of the core network device. The processing module 902 is configured to determine first information, where the first information indicates a correspondence between a first data packet and a second data packet, and the first information is used to adjust a delay budget of the second data packet. The interface module 901 is configured to send the first information to a radio access network device.

In a possible implementation of the apparatus 900, the first information includes information about a first time window, a time domain position of the first data packet is in the first time window, and the correspondence includes a correspondence between the first time window and the second data packet.

In a possible implementation of the apparatus 900, the first time window is determined based on an arrival periodicity of the first data packet, an arrival periodicity of the second data packet, a jitter of the first data packet, and a jitter of the second data packet.

In a possible implementation of the apparatus 900, the first information includes a time interval between the first time window and a time domain position of the second data packet.

In a possible implementation of the apparatus 900, the first information includes information about a first time window and information about a second time window, a time domain position of the first data packet is in the first time window, a time domain position of the second data packet is in the second time window, and the correspondence includes a correspondence between the first time window and the second time window.

In a possible implementation of the apparatus 900, the first time window is determined based on an arrival periodicity of the first data packet, an arrival periodicity of the second data packet, a jitter of the first data packet, and a jitter of the second data packet, and the second time window is determined based on the arrival periodicity of the first data packet, the arrival periodicity of the second data packet, the jitter of the first data packet, and the jitter of the second data packet.

In a possible implementation of the apparatus 900, the first information includes a time interval between the first time window and the second time window.

In a possible implementation of the apparatus 900, the first data packet is an uplink data packet, and the second data packet is a downlink data packet.

It may be understood that, for beneficial effects corresponding to the apparatus 900 and various possible implementations, refer to the descriptions in the foregoing method embodiments or SUMMARY. Details are not described herein again.

Optionally, the apparatus 900 may further include the storage module 903, configured to store data or instructions (which may also be referred to as code or a program). The other modules may interact with or be coupled to the storage module, to implement a corresponding method or function. For example, the processing module 902 may read the data or the instructions in the storage module 903, to enable the apparatus 900 to implement the method in the foregoing embodiments.

In an example, the module in the foregoing apparatus may be one or more integrated circuits configured to implement the foregoing method, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the module in the apparatus may be implemented by a processing element scheduling a program, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

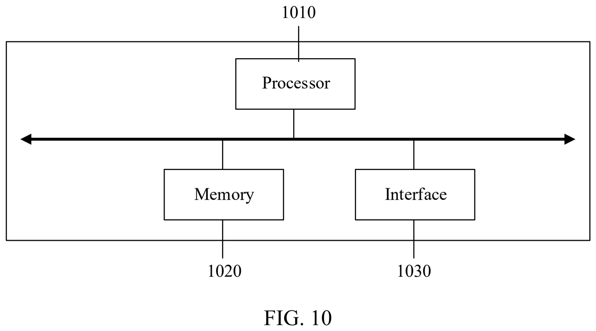

FIG. 10 is a diagram of an apparatus according to an embodiment of this application. The apparatus may be configured to implement the method 800 and various possible implementations. As shown in FIG. 10, the apparatus includes: a processor 1010 and an interface 1030. The processor 1010 is coupled to the interface 1030. The interface 1030 is configured to communicate with another module or device. The interface 1030 may be a transceiver or an input/output interface. The interface 1030 may be, for example, an interface circuit. Optionally, the apparatus further includes a memory 1020, configured to: store instructions executed by the processor 1010, store input data needed by the processor 1010 to run the instructions, or store data generated by running the instructions by the processor 1010.

The method 800 and various possible implementations may be implemented by the processor 1010 by invoking a program or the instructions stored in the memory 1020. The memory 1020 may be inside the apparatus, or may be outside the apparatus. This is not limited in this application.

Optionally, functions/implementation processes of the interface module 901 and the processing module 902 in FIG. 9 may be implemented by the processor 1010 in the apparatus shown in FIG. 10. Alternatively, a function/implementation process of the processing module 902 in FIG. 9 may be implemented by the processor 1010 in the apparatus shown in FIG. 10, and a function/implementation process of the interface module 901 in FIG. 9 may be implemented by the interface 1030 in the apparatus shown in FIG. 10. For example, the function/implementation process of the interface module 901 may be implemented by the interface 1030 that is driven by the processor by invoking program instructions in the memory.

When the apparatus is a chip used in a core network device, the chip implements functions of the core network device in the foregoing method embodiments. The chip receives information from another module (for example, a radio frequency module or an antenna) in the core network device, where the information is from another core network device or a radio access network device; or the chip sends information to another module (for example, a radio frequency module or an antenna) in the core network device, where the information is sent by the core network device to another core network device or a radio access network device.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a core network device; or the chip sends information to another module (for example, a radio frequency module or an antenna) in the radio access network device, where the information is sent by the radio access network device to another radio access network device or a core network device.

A person of ordinary skill in the art may understand that various numbers such as first and second in this application are merely for differentiation for ease of description, and are not intended to limit the scope of embodiments of this application. The numbers also indicate a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

The steps of the method described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk, a removable disk, or a storage medium in any other form in the art. For example, the storage medium may be connected to the processor, so that the processor can read information from the storage medium and write information into the storage medium. Alternatively, the storage medium may be integrated into the processor. The processor and the storage medium may be disposed in an ASIC.

This application further provides a computer-readable medium. The computer-readable medium stores a computer program. When the computer program is executed by a computer, functions of any one of the foregoing method embodiments are implemented.

This application further provides a computer program product. When the computer program product is executed by a computer, functions of any one of the foregoing method embodiments are implemented. For same or similar parts in embodiments of this application, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing implementations of this application constitute no limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A communication method, comprising:

   obtaining first information from a core network, wherein the first information indicates a correspondence between a first data packet and a second data packet; and
   adjusting a delay budget of the second data packet based on the first information and second information, wherein the second information is related to a transmission status of the first data packet.

2. The method according to claim 1, wherein the second information comprises actual average time for transmission of the first data packet, and a delay budget of the first data packet.

3. The method according to claim 1, wherein the first information comprises information about a first time window, and a time domain position of the first data packet is in the first time window; and
the correspondence comprises a correspondence between the first time window and the second data packet.

4. The method according to claim 3, wherein the first time window is determined based on an arrival periodicity of the first data packet, an arrival periodicity of the second data packet, a jitter of the first data packet, and a jitter of the second data packet.

5. The method according to claim 3 or 4, wherein
the first information comprises a time interval between the first time window and a time domain position of the second data packet.

6. The method according to claim 1, wherein the first information comprises information about a first time window and information about a second time window, a time domain position of the first data packet is in the first time window, and a time domain position of the second data packet is in the second time window; and
the correspondence comprises a correspondence between the first time window and the second time window.

7. The method according to claim 6, wherein the first time window is determined based on an arrival periodicity of the first data packet, an arrival periodicity of the second data packet, a jitter of the first data packet, and a jitter of the second data packet, and the second time window is determined based on the arrival periodicity of the first data packet, the arrival periodicity of the second data packet, the jitter of the first data packet, and the jitter of the second data packet.

8. The method according to claim 6, wherein
the first information comprises a time interval between the first time window and the second time window.

9. The method according to any one of claims 1 to 8, wherein the first data packet is an uplink data packet, and the second data packet is a downlink data packet.

10. A communication method, comprising:

determining first information, wherein the first information indicates a correspondence between a first data packet and a second data packet, and the first information is used to adjust a delay budget of the second data packet; and
sending the first information to a radio access network device.

11. The method according to claim 10, wherein the first information comprises information about a first time window, and a time domain position of the first data packet is in the first time window; and
the correspondence comprises a correspondence between the first time window and the second data packet.

12. The method according to claim 11, wherein the determining the first information comprises:
determining the first time window based on an arrival periodicity of the first data packet, an arrival periodicity of the second data packet, a jitter of the first data packet, and a jitter of the second data packet.

13. The method according to claim 11 or 13, wherein
the first information comprises a time interval between the first time window and a time domain position of the second data packet.

14. The method according to claim 10, wherein the first information comprises information about a first time window and information about a second time window, a time domain position of the first data packet is in the first time window, and a time domain position of the second data packet is in the second time window; and
the correspondence comprises a correspondence between the first time window and the second time window.

15. The method according to claim 14, wherein the determining the first information comprises:

determining the first time window based on an arrival periodicity of the first data packet, an arrival periodicity of the second data packet, a jitter of the first data packet, and a jitter of the second data packet; and
determining the second time window based on the arrival periodicity of the first data packet, the arrival periodicity of the second data packet, the jitter of the first data packet, and the jitter of the second data packet.

**16.** The method according to claim 14 or 15, wherein
the first information comprises a time interval between the first time window and the second time window.

**17.** The method according to any one of claims 10 to 17, wherein the first data packet is an uplink data packet, and the second data packet is a downlink data packet.

**18.** A communication apparatus, comprising a processor, wherein the processor is coupled to a memory, the memory is configured to store a program or instructions, and when the program or the instructions are executed by the processor, the apparatus is enabled to perform the method according to any one of claims 1 to 9.

**19.** A communication apparatus, comprising a processor, wherein the processor is coupled to a memory, the memory is configured to store a program or instructions, and when the program or the instructions are executed by the processor, the apparatus is enabled to perform the method according to any one of claims 10 to 17.

**20.** A computer-readable storage medium, wherein the computer-readable storage medium stores instructions, and when the instructions are executed, the method according to any one of claims 1 to 9 is performed, or the method according to any one of claims 10 to 17 is performed.

**21.** A computer program product, comprising computer program code, wherein when the computer program code is run, the method according to any one of claims 1 to 9 is implemented, or the method according to any one of claims 10 to 17 is implemented.

FIG. 1

FIG. 2

FIG. 3

FIG. 4

FIG. 5

FIG. 6

FIG. 7

Core network
device

800

Radio access
network device

810: Determine first information,
where the first information
indicates a correspondence
between a first data packet and a
second data packet

820: First information

830: Adjust a delay budget of the
second data packet based on the first
information and second information

FIG. 8

900

Storage module 903

Interface module 901

Processing module 902

FIG. 9

FIG. 10

## INTERNATIONAL SEARCH REPORT

International application No.

**PCT/CN2024/105032**

### A. CLASSIFICATION OF SUBJECT MATTER

H04W 72/512(2023.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 第一数据, 第二数据, 调节, 调整, 改变, 更改, 关联, 对应, 相关, 时间, 时间窗, 时延, 预算, first data, second data, adjust+, change, alterat+, associat+, correspond+, correlat+, time, time window, latency, budget

### C. DOCUMENTS CONSIDERED TO BE RELEVANT

| Category* | Citation of document, with indication, where appropriate, of the relevant passages | Relevant to claim No. |
|---|---|---|
| A | CN 113747512 A (HUAWEI TECHNOLOGIES CO., LTD.) 03 December 2021 (2021-12-03) description, paragraphs 2-141 | 1-21 |
| A | CN 113196847 A (BEIJING XIAOMI MOBILE SOFTWARE CO., LTD.) 30 July 2021 (2021-07-30) entire document | 1-21 |
| A | CN 115734290 A (VIVO COMMUNICATION TECHNOLOGY CO., LTD.) 03 March 2023 (2023-03-03) entire document | 1-21 |
| A | CN 116368916 A (QUECTEL WIRELESS SOLUTIONS CO., LTD.) 30 June 2023 (2023-06-30) entire document | 1-21 |
| A | US 2022216947 A1 (LG ELECTRONICS INC.) 07 July 2022 (2022-07-07) entire document | 1-21 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 October 2024** | **16 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/105032**

| Patent document cited in search report | | | Publication date (day/month/year) | Patent family member(s) | | | Publication date (day/month/year) |
|---|---|---|---|---|---|---|---|
| CN | 113747512 | A | 03 December 2021 | WO | 2021238685 | A1 | 02 December 2021 |
| | | | | EP | 4149159 | A1 | 15 March 2023 |
| | | | | US | 2023092723 | A1 | 23 March 2023 |
| CN | 113196847 | A | 30 July 2021 | WO | 2022198572 | A1 | 29 September 2022 |
| CN | 115734290 | A | 03 March 2023 | WO | 2023030096 | A1 | 09 March 2023 |
| | | | | US | 2024206009 | A1 | 20 June 2024 |
| | | | | EP | 4398630 | A1 | 10 July 2024 |
| | | | | JP | 2024530309 | A | 16 August 2024 |
| CN | 116368916 | A | 30 June 2023 | WO | 2024152327 | A1 | 25 July 2024 |
| US | 2022216947 | A1 | 07 July 2022 | WO | 2021002736 | A1 | 07 January 2021 |

Form PCT/ISA/210 (patent family annex) (July 2022)

**REFERENCES CITED IN THE DESCRIPTION**

**Patent documents cited in the description**

- CN 202310889568